# EUROPÄISCHE PATENTSCHRIFT

(11) **EP 3 953 602 B1**
(45) Veröffentlichungstag und Bekanntmachung des Hinweises auf die Patenterteilung: **10.09.2025**
(21) Anmeldenummer: 20704211.0
(22) Anmeldetag: 30.01.2020
(51) Int. Cl.: F16F 1/368, F16F 1/42

(54) **BIEGEFEDERELEMENT AUS EINEM FASERKUNSTSTOFFVERBUNDMATERIAL**
BENDING SPRING ELEMENT COMPRISING A FIBRE REINFORCED MATERIAL
ÉLÉMENT DE RESSORT À FLEXION AYANT UN MATERIAL RENFORCÉ DE FIBRES

(30) Priorität: 11.04.2019 DE 102019109554
(43) Veröffentlichungstag der Anmeldung: 16.02.2022
(73) Patentinhaber: DANTO Invention GmbH & Co. KG, 64589 Stockstadt am Rhein (DE); Rheinmetall Invent GmbH, 74172 Neckarsulm (DE)
(72) Erfinder: SCHWARZ, Anna, 67596 Dittelsheim-Heßloch (DE); KELLER, Tobias, 67596 Dittelsheim-Heßloch (DE)
(74) Vertreter: Habermann Intellectual Property Partnerschaft von Patentanwälten mbB
(86) Internationale Anmeldenummer: PCT/EP2020/052358
(87) Internationale Veröffentlichungsnummer: WO 2020/207636

(56) Entgegenhaltungen:
- EP-A1- 0 005 916
- WO-A1-85/00207
- DE-A1- 102008 006 411
- DE-B3- 102015 012 334
- US-A- 4 942 075
- US-A1- 2018 216 687

## Beschreibung

Die Erfindung betrifft ein Biegefederelement aus einem Faserkunststoffverbundmaterial, wobei das Biegefederelement auf zwei einander gegenüberliegenden Außenseiten jeweils eine Deckschicht aus einem ersten Faserkunststoffverbundmaterial aufweist, wobei Fasern innerhalb der Deckschichten zumindest bündelweise relativ zueinander parallel ausgerichtet sind und parallel zu der der jeweiligen Deckschicht zugeordneten Außenseite verlaufen, wobei das Biegefederelement mindestens einen Krümmungsabschnitt aufweist, in welchem eine in einem gleichen Abstand zwischen den beiden Deckschichten verlaufende Mittenebene des unbelasteten Biegefederelements in einer Längsrichtung des Biegefederelements gekrümmt verläuft, wobei das Biegefederelement mindestens einen Längsabschnitt aufweist, in welchem die Mittenebene des unbelasteten Biegefederelements entweder keine nennenswerte Krümmung oder eine Krümmungsumkehr aufweist, wobei bei einer bestimmungsgemäßen Auslenkung des Biegefederelements ein in dem Krümmungsabschnitt nach außen gerichtet angeordneter Deckschichtabschnitt auf Zug beansprucht und ein in dem Krümmungsabschnitt gegenüberliegender und nach innen gerichteter Deckschichtabschnitt auf Druck beansprucht ist, und wobei das Biegefederelement in dem mindestens einen Längsabschnitt ausschließlich die beiden Deckschichten aufweist, und dass das Biegefederelement in dem mindestens einen Krümmungsabschnitt ein zwischen den beiden Deckschichten angeordnetes Abstandserweiterungselement aus einem anderen Material als die beiden Deckschichten aufweist, wobei das Biegefederelement mindestens zwei durch einen Längsabschnitt voneinander getrennte und in unterschiedliche Richtungen gekrümmte Krümmungsabschnitte aufweist, sodass die Mittenebene über diese beiden Krümmungsabschnitte hinweg einen S-förmigen Verlauf aufweist.

Ein Biegefederelement kann einstückig ausgestaltet sein und eine Biegefeder oder eine Biegefedereinrichtung bilden. Es ist ebenfalls möglich, dass mehrere Biegefederelemente zu einer Biegefedereinrichtung kombiniert und miteinander in Wirkverbindung gebracht werden. Ein einzelnes Biegefederelement kann beispielsweise balkenförmig ausgestaltet sein und einen geraden oder geringfügig gekrümmten Verlauf aufweisen. Es sind auch Biegefederelemente bekannt, die einen komplex gekrümmten Verlauf und beispielsweise eine C-förmige oder S-förmige Formgebung bzw. mehrere abwechselnde und mäanderförmig ausgestaltete Krümmungen aufweisen.

Biegefederelemente können aus verschiedenen Materialien hergestellt werden. Herkömmliche Biegefederelemente sind beispielsweise oftmals aus einem geeigneten Federstahl hergestellt. Derartige Biegefederelemente können kostengünstig hergestellt werden, wobei die Formgebung der Biegefederelemente an die jeweilige Aufgabenstellung angepasst sein kann. Biegefederelemente aus Federstahl oder aus einem anderen geeigneten Metall sind widerstandsfähig und weisen vorteilhafte Federeigenschaften auf. Sehr widerstandsfähige Biegefederelemente aus Metall sind beispielsweise in US 2018/0216678 A1 gezeigt und beschrieben.

Es ist ebenfalls bekannt und für verschiedene Anwendungsbereiche bereits erprobt, Biegefederelemente aus einem geeigneten Faserkunststoffverbundmaterial herzustellen. Dabei wird üblicherweise ein Faserkunststoffverbundmaterial verwendet, bei dem quasiendlose Fasern in einem geeigneten Matrixmaterial aus Kunststoff eingebettet sind. Durch die Anordnung und Ausrichtung der einzelnen Fasern, welche maßgeblich für eine Zug- und Druckübertragung entlang des Biegefederelements verantwortlich sind, können vorteilhafte Federeigenschaften begünstigt werden. Biegefederelemente aus einem Faserkunststoffverbundmaterial können im Vergleich zu Biegefederelementen aus Metall ein geringeres Gewicht und eine bessere Widerstandsfähigkeit gegenüber Umgebungsbedingungen und insbesondere gegenüber Feuchtigkeit aufweisen. Eine aus mehreren Biegefederelementen zusammengesetzte Biegefedereinrichtung ist in DE 10 2015 012 334 B3 beschrieben. Biegefederelemente aus einem geeigneten Faserkunststoffverbundmaterial können in vorteilhafter Weise bei Kraftfahrzeugen eingesetzt werden.

Allerdings ist die Herstellung von Biegefederelementen aus einem Faserkunststoffverbundmaterial oftmals mit einem hohen Herstellungsaufwand und damit einhergehend mit hohen Herstellungskosten verbunden. Dabei ist insbesondere bei Biegefederelementen mit einer sich verändernden Dicke der Aufwand ganz erheblich und hinsichtlich der Herstellungskosten oftmals ausschlaggebend, der für die Herrichtung einer großen Anzahl von unterschiedlich langen, vorkonfektionierten Streifen aus Faserkunststoffverbundmaterial bzw. Prepregs, deren Anordnung in einer Werkzeugform und deren anschließendes Verpressen anfällt. Eine derartige Biegefedereinrichtung ist beispielsweise in DE 10 2008 006 411 A1 beschrieben. Es sind beispielsweise aus WO 1985/000207 A1 auch andere Mittel bekannt, um die Federeigenschaften von Biegefederelementen aus einem Faserkunststoffverbundmaterial zu beeinflussen.

Ein als im Wesentlichen ebene Blattfeder ausgestaltetes Biegefederelement ist beispielsweise in US 3,968,958 beschrieben. Die Konfektionierung der unterschiedlich langen, vorkonfektionierten Prepregs und insbesondere deren Anordnung in einer Werkzeugform sowie deren Fixierung während des unter Druck erfolgenden Aushärtungsvorgangs der Prepregs in der Werkzeugform ist mit einem erheblichen und oftmals nur manuell durchführbaren Aufwand verbunden. Durch die zwischen den äußeren Deckschichten angeordneten, kürzer ausgebildeten zusätzlichen Mittelschichten wird ein mittlerer Abschnitt der Blattfeder zusätzlich verstärkt.

Bei einem Biegefederelement mit einem Krümmungsabschnitt, bei dem sich der Verlauf des Biegefederelements mindestens um mehr als 90°, in vielen praktischen Anwendungsfällen jedoch um etwa 180° verändert, ist der Krümmungsabschnitt oftmals dicker als ein angrenzender Längsabschnitt ausgebildet, in welchem sich der Verlauf des Biegefederelements nicht oder jedenfalls nicht nennenswert verändert. Das Biegefederelement wird bei einer quer zu dem Verlauf in Längsrichtung gerichteten Krafteinwirkung in dem Krümmungsabschnitt höher beansprucht. Dabei wird bei einer bestimmungsgemäßen Auslenkung des Biegefederelements durch die einwirkende Kraft ein in dem Krümmungsabschnitt nach außen gerichtet angeordneter Deckschichtabschnitt auf Zug beansprucht und ein in dem Krümmungsabschnitt gegenüberliegender und nach innen gerichteter Deckschichtabschnitt auf Druck beansprucht, während die Deckschichtabschnitte in einem angrenzenden Längsabschnitt des Biegefederelements weniger auf Zug oder Druck beansprucht werden.

Wenn das Biegefederelement mit einer einheitlichen Dicke bzw. mit einem einheitlichen Abstand der beiden Deckschichten ausgebildet ist, muss die Dicke des Biegefederelements an die Zug- und Druckbelastung angepasst sein, die bei einer maximal vorgesehenen bestimmungsgemäßen Krafteinwirkung auf den Krümmungsabschnitt des Biegefederelements auftreten kann. In einem angrenzenden Längsabschnitt tritt dabei eine deutlich geringere Belastung auf, sodass das Biegefederelement bei einer einheitlichen Dicke in diesem Längsabschnitt überdimensioniert ist. Das Gewicht des Biegefederelements sowie der Materialaufwand wären dann übermäßig groß, was insbesondere im Hinblick auf eine üblicherweise angestrebte Leichtbauweise mit Faserkunststoffverbundmaterialien als nachteilig angesehen wird.

Aus EP 0 005 916 ist ein als Blattfeder ausgebildetes Biegefederelement bekannt, bei welchem zwischen zwei außenliegenden Deckschichten aus einem Kunststoffverbundmaterial mit längsgerichteten Fasern eine dazwischen angeordnete Einlage aus einem anderen Kunststoffverbundmaterial mit kurzen und ungerichteten Faserstücken angeordnet ist. Die Einlage erstreckt sich fast über die gesamte Länge des Biegefederelements und ist in einem mittleren Bereich dicker als zu den jeweiligen Enden hin. Die EP 0 005 916 offenbart ein Biegefederelement mit den Merkmalen der Präambel des Anspruchs 1.

Es wird deshalb als eine Aufgabe der vorliegenden Erfindung angesehen, ein Biegefederelement aus einem Kunststoffverbundmaterial so auszugestalten, dass das Biegefederelement kostengünstig hergestellt werden kann, in einfacher Weise in verschiedenen Abschnitten an die üblicherweise auftretenden Beanspruchungen angepasst sein kann und möglichst vorteilhafte Federeigenschaften aufweisen kann.

Diese Aufgabe wird erfindungsgemäß durch ein Biegefederelement mit den Merkmalen des Anspruchs 1 gelöst.

Es hat sich gezeigt, dass mit geringem Material- und Herstellungsaufwand besonders vorteilhafte Federeigenschaften in einfacher Weise dadurch ermöglicht werden können, dass in dem mindestens einen Krümmungsabschnitt und vorzugsweise in mehreren Krümmungsabschnitten des Biegefederelements Abstandserweiterungselemente angeordnet sind, durch welche eine quer zu der Längsrichtung des Biegefederelements gemessene Dicke des Biegefederelements vergrößert werden kann. Die durch die Biegebeanspruchung des Biegefederelements bei einer bestimmungsgemäßen Belastung auftretenden Verformungskräfte können durch das Abstandserweiterungselement von einem dadurch verdickten Krümmungsabschnitt besonders vorteilhaft aufgenommen und in Federenergie umgewandelt werden. Indem ein quer zu der Längsrichtung gemessener Abstand der Deckschichten und damit ein Abstand der Deckschichten zu der Mittenebene und der darin verlaufenden neutralen Faser vergrößert wird, weist das Biegefederelement in dem Krümmungsabschnitt einen größeren Verformungswiderstand auf als in einem angrenzenden Längsabschnitt, ohne dass zu diesem Zweck zusätzliche Mittelschichten zwischen den Deckschichten angeordnet werden müssen, die sich nur über den Krümmungsabschnitt hinweg erstrecken.

Das in dem Krümmungsabschnitt zwischen den beiden Deckschichten angeordnete Abstandserweiterungselement weist dabei erfindungsgemäß in Längsrichtung eine kontinuierlich sich verändernde Dicke auf, so dass das Abstandserweiterungselement ausgehend von einem spitz auslaufenden ersten Ende kontinuierlich dicker wird und in einem mittleren Bereich eine maximale Dicke aufweist, um zu dem gegenüberliegenden zweiten Ende sich zunehmend zu verjüngen und ebenfalls wieder spitz auszulaufen. Auf diese Weise können abrupte Dickenänderungen in dem Biegefederelement vermieden werden, die erfahrungsgemäß zu Belastungsspitzen und einer oftmals sehr hohen und gegebenenfalls übermäßigen Beanspruchung während einer bestimmungsgemäßen Verwendung des Biegefederelements führen können.

Es ist vorteilhaft, wenn das Abstandserweiterungselement aus einem möglichst schubfesten und schubsteifen Material hergestellt ist. Es ist grundsätzlich denkbar, dass das Abstandserweiterungselement beispielsweise aus Holz oder aus einem geeigneten Kunststoffmaterial hergestellt ist. Das Abstandserweiterungselement kann vorkonfektioniert bzw. vorab hergestellt sein, wobei das Abstandserweiterungselement zweckmäßigerweise bereits eine Formgebung aufweist, die an eine Formgebung bzw. an einen Verlauf des unbelasteten Biegefederelements innerhalb des Krümmungsabschnitts angepasst ist.

Biegefederelemente mit mindestens einem S-förmig ausgebildeten Federabschnitt und insbesondere Biegefederelemente mit zwei oder mehr aneinander angrenzend ausgebildeten S-förmigen Federabschnitten ermöglichen eine für viele Anwendungsfälle besonders vorteilhafte Kombination einer hohen Federkraft mit einem möglichst geringen Raumbedarf. Mehrere ähnliche oder baugleiche Biegefederelemente können zu einer Biegefedereinrichtung kombiniert werden, die vorteilhafte Federeigenschaften mit einer hohen Widerstandsfähigkeit gegenüber Umwelteinflüssen und mit einem geringen Eigengewicht kombinieren. Ein erfindungsgemäßes Biegefederelement oder eine aus mehreren Biegefederelementen kombinierte Biegefedereinrichtung eignet sich deshalb auch und in besonderer Weise für die Verwendung als Federelement in Kraftfahrzeugen.

Gemäß einer vorteilhaften Ausgestaltung des Erfindungsgedankens ist vorgesehen, dass das Material des Abstandserweiterungselements ein zweites Faserkunststoffverbundmaterial mit Fasern ist, deren Länge jeweils weniger als 30 mm, vorzugsweise weniger als 10 mm und besonders vorzugsweise weniger als 1 mm beträgt. Das zweite Faserkunststoffverbundmaterial mit derart kurzen Fasern lässt sich besonders vorteilhaft und kostengünstig bearbeiten und in die für das Abstandserweiterungselement gewünschte Formgebung bringen. Die einzelnen Fasern können dabei keine Zug- oder Druckkräfte über große Bereiche hinweg übertragen, was sich jedoch als nicht notwendig herausgestellt hat. Durch die Anordnung eines Abstandserweiterungselements zwischen zwei außen liegenden Deckschichten kann in dem Krümmungsabschnitt eine quer zu einer Längsrichtung des Biegefederelements gemessene Dicke des Biegefederelements an die bestimmungsgemäße Biegebeanspruchung des Biegefederelements angepasst werden und wesentlich dicker als die Gesamtdicke der beiden Deckschichten ausgestaltet sein. Das aus einem zweiten Faserkunststoffverbundmaterial hergestellte Abstandserweiterungselement kann ein geringes Eigengewicht aufweisen. Durch das zusätzliche zweite Faserkunststoffverbundmaterial des Abstandserweiterungselements können die beiden wesentlich kostenintensiveren Deckschichten des Biegefederelements in dem Krümmungsabschnitt vergleichsweise dünn ausgebildet sein und an die bestimmungsgemäße bzw. maximal erwartete Zug- und Druckbeanspruchung der Deckschichten des Biegefederelements innerhalb des Krümmungsabschnitts angepasst sein.

Es hat sich herausgestellt, dass das Biegefederelement besonders vorteilhafte Federeigenschaften aufweist, wenn die Fasern in dem zweiten Faserkunststoffverbundmaterial ungerichtet angeordnet sind. Eine derartige ungerichtete Anordnung der in das Matrixmaterial des zweiten Faserkunststoffverbundmaterials eingebetteten Fasern wird auch als Wirrfasern bezeichnet. In vielen Anwendungsfällen gilt, dass die Federeigenschaften umso vorteilhafter ausgestaltet werden können, je homogener die Fasern in dem zweiten Faserkunststoffverbundmaterial verteilt sind. Je kürzer die Länge der einzelnen Fasern in dem zweiten Faserkunststoffverbundmaterial ist, umso einfacher können eine erfindungsgemäß homogene Verteilung der Fasern in dem Abstandserweiterungselement sowie eine homogen verteile Ausrichtung der einzelnen Fasern zueinander herbeigeführt werden.

Gemäß einer besonders vorteilhaften Ausgestaltung des Erfindungsgedankens ist vorgesehen, dass das zweite Faserkunststoffverbundmaterial ein mit den beiden Deckschichten übereinstimmendes Kunststoffmatrixmaterial aufweist. Durch die Verwendung desselben Kunststoffmatrixmaterials für die Deckschichten und für das zwischen den Deckschichten angeordnete Abstandserweiterungselement kann eine stoffschlüssige und übergangslose Verbindung des Abstandserweiterungselements mit den auf beiden Seiten angrenzenden Deckschichten bewirkt werden. Ein unbeabsichtigtes Ablösen der Deckschichten von dem Abstandserweiterungselement wird dadurch auch bei hohen Belastungen des Biegefederelements vermieden und zumindest erschwert.

Ein Abstandserweiterungselement kann durch Einbringen eines pastösen Ausgangsmaterials zwischen bereits vorgefertigte und gegebenenfalls vorgeformte Deckschichten hergestellt werden. Dabei kann das Abstandserweiterungselement je nach dem verwendeten Material auch durch bereits bekannte Spritzgussverfahren hergestellt werden. Anschließend können die Deckschichten zusammen mit den dazwischen angeordneten Abstandserweiterungselement verbunden und dadurch das gewünschte Biegefederelement hergestellt werden. Das Abstandserweiterungselement kann auch durch bereits bekannte Spritzgussverfahren zwischen die bereits in einer Werkzeugform angeordneten Deckschichten in den Krümmungsabschnitt eingebracht werden. Es ist ebenso denkbar, dass das Abstandserweiterungselement in einem gesonderten Arbeitsschritt getrennt von den Deckschichten hergestellt wird. Anschließend können die Deckschichten zusammen mit dem dazwischen angeordneten Abstandserweiterungselement verbunden und zu dem gewünschten Biegefederelement geformt und verfestigt werden.

Optional ist vorgesehen, dass die Mittenebene in dem mindestens einen Krümmungsabschnitt des Biegefederelements eine Richtungsänderung von mehr als 90°, vorzugsweise von mehr als 150° und besonders vorzugsweise von näherungsweise 180° aufweist. Bei einem Krümmungsabschnitt, dessen Verlauf in Längsrichtung sich um mehr als 150° und vorzugsweise um etwa 180° ändert, kann durch eine quer zu den beiden Endbereichen des Krümmungsabschnitts gerichtete Krafteinwirkung durch eine bestimmungsgemäße Verformung des Biegefederelements innerhalb des Krümmungsabschnitts besonders wirkungsvoll aufgenommen und bei einem geringen Raumbedarf eine hohe Federrückstellkraft und damit eine große Federwirkung erzeugt werden.

Die Deckschichten weisen besonders vorteilhafte Eigenschaften auf, wenn das erste Faserkunststoffverbundmaterial der beiden Deckschichten unidirektional in der Längsrichtung des Biegefederelements ausgerichtete Fasern aufweist. Durch die unidirektional und in der Längsrichtung ausgerichteten Fasern können die Deckschichten besonders hohe Zug- und Druckkräfte aufnehmen. Dabei können die Deckschichten entweder parallel zu der Längsrichtung verlaufende oder in einem vorzugsweise in einem spitzen Winkel zur Längsrichtung verlaufende Fasern oder Faserbündel aufweisen. Geeignete Fasern können beispielsweise Glasfasern, Kohlenstofffasern, Keramikfasern, Basaltfasern, Metallfasern oder aber auch Naturfasern sein. Ein geeignetes Matrixmaterial kann ein an die jeweiligen Fasern angepasstes Kunststoffmaterial wie beispielsweise ein geeignetes Duromer, Elastomer oder Thermoplast sein. Das Abstandserweiterungselement kann gleiche oder aus einem anderen Material hergestellte Fasern wie die Deckschichten aufweisen.

Optional ist vorgesehen, dass das erste Faserkunststoffverbundmaterial Fasern aufweist, deren Länge sich in Längsrichtung über das ganze Biegefederelement hinweg erstreckt. Eine auf die Deckschichten einwirkende Zug- oder Druckbelastung wird dadurch von den quasi endlosen Fasern über das gesamte Biegefederelement verteilt, wodurch eine Bruchgefahr bei einer übermäßigen Belastung reduziert wird.

Nachfolgend wird ein exemplarisches Ausführungsbeispiel näher erläutert, welches in der Zeichnung schematisch dargestellt ist. Es zeigt:
Figur 1 eine schematische Schnittansicht eines Biegefederelements mit einem S-förmigen Verlauf,
Figur 2 eine schematische Schnittansicht des in Figur 1 gezeigten Biegefederelements längs einer Linie II-II in Figur 1,
Figur 3 eine schematische Schnittansicht des in Figur 1 gezeigten Biegefederelements läng einer Linie III-III in Figur 1,
Figur 4 eine schematische Schnittansicht eines erfindungsgemäßen Biegefederelements mit mehreren Krümmungsabschnitten, welches für die Verwendung in einem Kraftfahrzeug bestimmt und geeignet ist, und
Figur 5 eine schematische Schnittansicht eines abweichend ausgestalteten, jedoch ebenfalls für die Verwendung in einem Kraftfahrzeug vorgesehenen Biegefederelements.

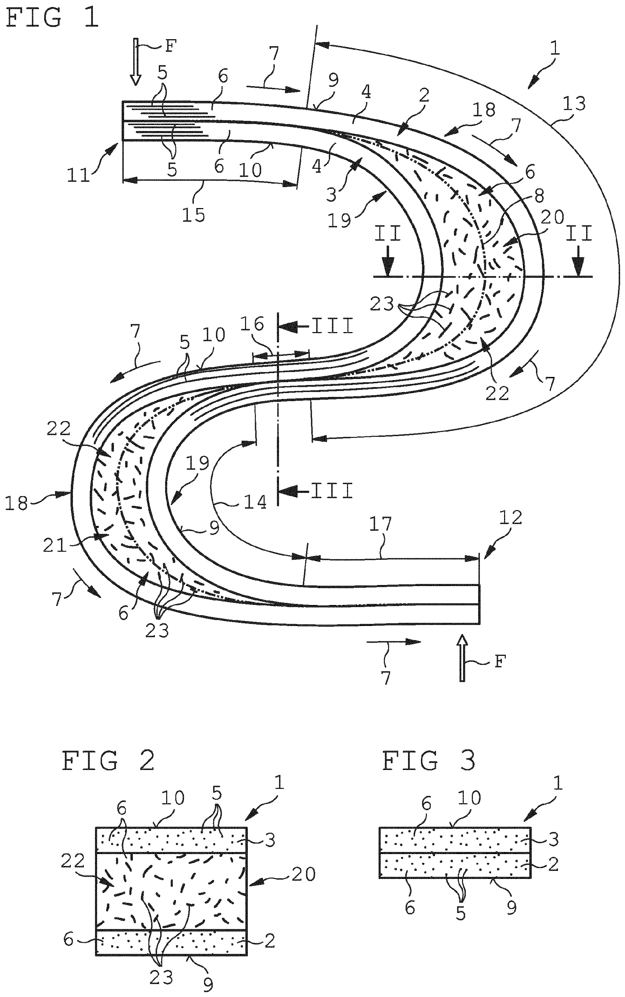

Ein in den Figuren 1 bis 3 in verschiedenen Ansichten dargestelltes Biegefederelement 1 weist zwei Deckschichten 2, 3 auf, die jeweils aus einem ersten Faserkunststoffverbundmaterial 4 hergestellt sind. In den beiden Deckschichten 2, 3 sind jeweils endlose Fasern 5 in einem Matrixkunststoffmaterial 6 so angeordnet, dass die Fasern 5 sich in einer Längsrichtung 7 über das gesamte Biegefederelement 1 hinweg erstrecken. Die Längsrichtung 7 entspricht dem Verlauf einer Mittenebene 8, die zwischen zwei nach außen gerichteten Außenseiten 9, 10 der beiden Deckschichten 2, 3 jeweils in einem gleichen Abstand zu den beiden Außenseiten 9, 10 verläuft. Bei dem exemplarisch dargestellten Ausführungsbeispiel entspricht der Verlauf der Mittenebene 8 auch dem Verlauf einer neutralen Faser, die bei einer bestimmungsgemäßen Krafteinwirkung F jeweils quer zu der Längsrichtung 7 auf beide Endbereiche 11, 12 des Biegefederelements 1 nicht belastet wird. Es ist jedoch ebenfalls denkbar, dass beispielsweise die beiden Deckschichten 2, 3 nicht dieselbe Dicke aufweisen, sodass die Mittenebene 8 nicht notwendigerweise dem Verlauf der neutralen Faser entsprechen muss.

Die Mittenebene 8 weist einen S-förmigen Verlauf auf. Das Biegefederelement 1 weist zwei Krümmungsabschnitte 13, 14 mit einem sich um etwa 180° verändernden gekrümmten Verlauf auf, die jeweils zwischen zwei Längsabschnitten 15, 16, 17 angeordnet sind. Die beiden Endbereiche 11, 12 werden jeweils durch einen Längsabschnitt 15, 17 gebildet, in welchen das Biegefederelement 1 einen näherungsweise gradlinigen Verlauf der Mittenebene 8 aufweist. Zwischen den beiden Krümmungsabschnitten 13, 14 ist ebenfalls ein Längsabschnitt 16 ausgebildet, in welchem die Mittenebene 8 näherungsweise gradlinig verläuft und eine Krümmungsumkehr von dem ersten Krümmungsabschnitt 13 zu dem zweiten Krümmungsabschnitt 14 aufweist.

In den Längsabschnitten 15, 16 und 17 sind die beiden Deckschichten 2, 3 unmittelbar aneinander anliegend miteinander verbunden, wie es schematisch in Figur 3 dargestellt ist. Die in das Matrixkunststoffmaterial 6 der Deckschichten 2, 3 eingebetteten Fasern 5 verlaufen im Wesentlichen parallel zu den jeweiligen Außenseiten 9, 10 der betreffenden Deckschicht 2, 3 und erstrecken sich in Längsrichtung 7 über das gesamte Biegefederelement 1. Die Ausrichtung der einzelnen Fasern 5 ist demzufolge bei der in Figur 3 dargestellten Schnittansicht senkrecht zur Abbildungsebene und verläuft bei der in Figur 1 dargestellten Schnittansicht innerhalb der Abbildungsebene. Die Fasern 5 werden bei einer bestimmungsgemäß auf das Biegefederelement einwirkenden Kraft F im Wesentlichen entlang der in dem Krümmungsabschnitt 13, 14 nach außen gerichteten Außenseitenabschnitte 18 auf Zug und entlang der in dem Krümmungsabschnitt 13, 14 nach innen gerichteten Außenseitenabschnitte 19 auf Druck beansprucht.

In den beiden Krümmungsabschnitten 13, 14 ist jeweils ein Abstandserweiterungselement 20, 21 ausgebildet. Das Abstandserweiterungselement 20, 21 bewirkt einen größeren Abstand zwischen den nach außen gerichteten Außenseitenabschnitten 18 und den nach innen gerichteten Außenseitenabschnitten 19 der beiden Deckschichten 2, 3 innerhalb der Krümmungsabschnitte 13, 14 und bewirkt dadurch vorteilhafte Federeigenschaften des Biegefederelements 1 im Bereich des betreffenden Krümmungsabschnitts 13, 14.

Die beiden Abstandserweiterungselemente 20, 21 weisen eine näherungsweise sichelförmige Formgebung auf. Das in dem jeweiligen Krümmungsabschnitt 13, 14 zwischen den beiden Deckschichten 2, 3 angeordnete Abstandserweiterungselement 20, 21 weist dabei erfindungsgemäß in Längsrichtung eine kontinuierlich sich verändernde Dicke auf, so dass das Abstandserweiterungselement 20, 21 ausgehend von einem spitz auslaufenden ersten Ende kontinuierlich dicker wird und in einem mittleren Bereich eine maximale Dicke aufweist, um zu dem gegenüberliegenden zweiten Ende sich zunehmend zu verjüngen und ebenfalls wieder spitz auszulaufen. Auf diese Weise können abrupte Dickenänderungen in dem Biegefederelement 1 vermieden werden, die erfahrungsgemäß zu Belastungsspitzen und einer oftmals sehr hohen und gegebenenfalls übermäßigen Beanspruchung während einer bestimmungsgemäßen Verwendung des Biegefederelements 1 führen können. Die beiden Abstandserweiterungselemente 20, 21 müssen nicht notwendigerweise symmetrisch zur Mittenebene 8 ausgestaltet sein.

Jedes der beiden Abstandserweiterungselemente 20, 21 ist aus einem zweiten Faserkunststoffverbundmaterial 22 hergestellt. Das zweite Faserkunststoffverbundmaterial 22 weist das gleiche Matrixkunststoffmaterial 6 wie das erste Faserkunststoffverbundmaterial 4 auf, sodass sich die Abstandserweiterungselemente 20, 21 stoffschlüssig und homogen mit den beiden angrenzenden Deckschichten 2, 3 verbinden, ohne dass sich die mechanische Festigkeit des Biegefederelements 1 eventuell beeinträchtigende Grenzflächen zwischen den Abstandserweiterungselementen 20, 21 und den angrenzenden Deckschichten 2, 3 ausbilden.

In das Matrixkunststoffmaterial 6 des zweiten Faserkunststoffverbundmaterials 22 sind kurze Fasern 23 mit einer vorzugsweise einheitlichen Länge zwischen 1 mm und 5 mm angeordnet. Die kurzen Fasern 23 sind ungerichtet in den Abstandserweiterungselementen 20, 21 ausgerichtet, sodass eine im Wesentlichen homogene Verteilung und in allen Richtungen ausgerichtete Verteilung der kurzen Fasern 23 in dem Matrixkunststoffmaterial 6 des zweiten Faserkunststoffverbundmaterials 22 vorliegt.

Die Abmessungen der Abstandserweiterungselemente 20, 21 sind insbesondere hinsichtlich der jeweiligen Dicke quer zu dem Verlauf der Mittenebene 8 so bemessen, dass das Biegefederelement 1 innerhalb des vorgesehenen Bereichs der üblicherweise auftretenden Krafteinwirkung vorteilhafte Federeigenschaften aufweist und eine Beschädigung des Biegefederelements 1 weitestgehend ausgeschlossen ist. Gleichzeitig sind auch die Deckschichten 2, 3 so dimensioniert, dass eine bestimmungsgemäße Verwendung des Biegefederelements 1 über die vorgesehene Verwendungsdauer hinweg möglich ist und dennoch möglichst wenig Material für die Deckschichten 2, 3 und die Abstandserweiterungselemente 20, 21 aufgewendet wird, sodass das erfindungsgemäße Biegefederelement 1 vorteilhafte Federeigenschaften bei einem besonders niedrigen Eigengewicht aufweist.

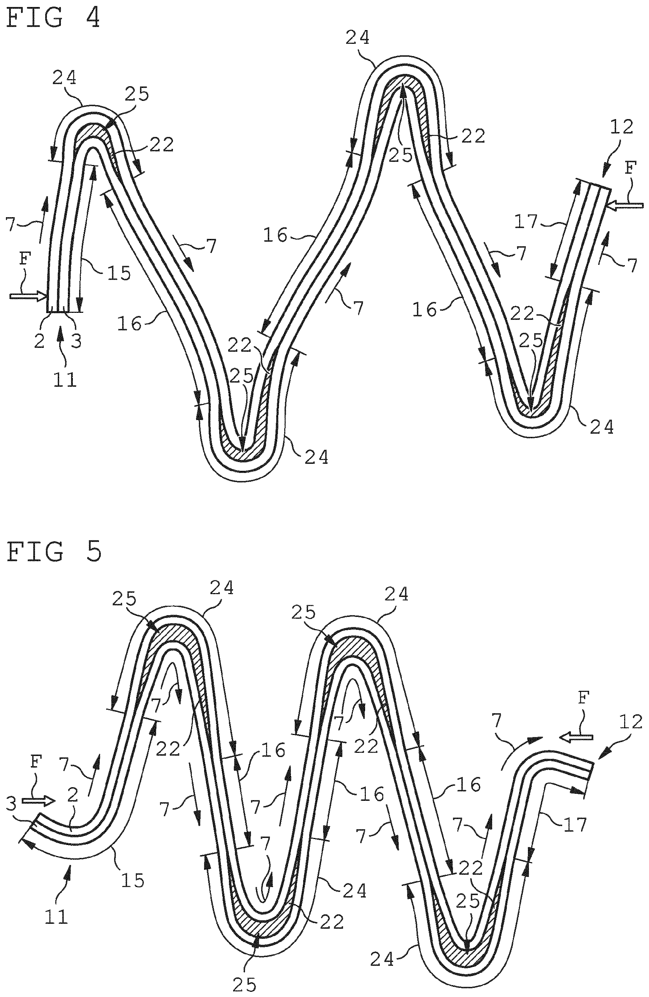

In den Figuren 4 und 5 ist jeweils ein erfindungsgemäß ausgestaltetes Biegefederelement 1 mit mehr als zwei, bzw. mit insgesamt vier Krümmungsabschnitten 24 dargestellt. Die einzelnen Krümmungsabschnitte 24 sind jeweils zwischen an beiden Seiten angrenzenden Längsabschnitten 15, 16, 17 angeordnet. Jedes der in den Figuren 4 und 5 exemplarisch gezeigten Biegefederelemente 1 weist mehrere S-förmig ausgestaltete und ineinander übergehende Biegefederabschnitte auf. In jedem der vier Krümmungsabschnitte 24 ist jeweils ein Abstandserweiterungselement 25 angeordnet, welches aus dem zweiten Kunststoffmaterial 22 mit den kurzen und ungerichteten Fasern 23 besteht, die in das Matrixkunststoffmaterial 6 eingebettet sind.

Die einzelnen Abstandserweiterungselemente 25 müssen nicht eine übereinstimmende Formgebung aufweisen. Vielmehr sind die einzelnen Abstandserweiterungselemente 25 an den Verlauf 7 des jeweiligen Biegefederelements 1 bzw. an den Verlauf 7 des betreffenden Krümmungsabschnitt 24 angepasst.

Bei dem in Figur 4 dargestellten Ausführungsbeispiel sind die beiden Endbereiche 11, 12 näherungsweise parallel zueinander ausgerichtet und laufen in entgegengesetzte Richtungen aus, wobei eine durch die Festlegung der Biegefederelements 1 vorgegebene und bestimmungsgemäße Krafteinwirkung senkrecht auf die beiden Endebereiche 11, 12 einwirkt. Bei dem in Figur 5 dargestellten Ausführungsbeispiel sind die beiden Endbereiche 11, 12 ebenfalls parallel zueinander ausgerichtet und laufen ebenfalls in entgegengesetzte Richtungen aus, jedoch wirkt eine bestimmungsgemäße Krafteinwirkung näherungsweise in der durch die Ausrichtung der Endbereiche 11, 12 vorgegebenen Richtung bzw. parallel ausgerichtet auf die beiden Endbereiche 11, 12 ein.

## Patentansprüche

1. Biegefederelement (1) aus einem Faserkunststoffverbundmaterial (4, 22), wobei das Biegefederelement (1) an zwei einander gegenüberliegenden Außenseiten (9, 10) jeweils eine Deckschicht (2, 3) aus einem ersten Faserkunststoffverbundmaterial (4) aufweist, wobei Fasern (5) innerhalb der Deckschichten (2, 3) zumindest bündelweise relativ zueinander parallel ausgerichtet sind und parallel zu der der jeweiligen Deckschicht (2, 3) zugeordneten Außenseite (9, 10) verlaufen, wobei das Biegefederelement (1) mindestens einen Krümmungsabschnitt (13, 14, 25) aufweist, in welchem eine in einem gleichen Abstand zwischen den beiden Deckschichten (2, 3) verlaufende Mittenebene (8) des unbelasteten Biegefederelements (1) in einer Längsrichtung (7) des Biegefederelements (1) gekrümmt verläuft, wobei das Biegefederelement (1) mindestens einen Längsabschnitt (15, 16, 17) aufweist, in welchem die Mittenebene (8) des unbelasteten Biegefederelements (1) entweder keine nennenswerte Krümmung oder eine Krümmungsumkehr aufweist, wobei bei einer bestimmungsgemäßen Auslenkung des Biegefederelements (1) ein in dem Krümmungsabschnitt (13, 14, 25) nach außen gerichtet angeordneter Deckschichtabschnitt (18) auf Zug beansprucht und ein in dem Krümmungsabschnitt (13, 14, 25) gegenüberliegender und nach innen gerichteter Deckschichtabschnitt (19) auf Druck beansprucht ist, und wobei das Biegefederelement (1) in dem mindestens einen Längsabschnitt (15, 16, 17) ausschließlich die beiden Deckschichten (2, 3) aufweist, und dass das Biegefederelement (1) in dem mindestens einen Krümmungsabschnitt (13, 14, 25) ein zwischen den beiden Deckschichten (2, 3) angeordnetes Abstandserweiterungselement (20, 21) aus einem anderen Material als die beiden Deckschichten (2, 3) aufweist, **dadurch gekennzeichnet, dass** das Biegefederelement (1) mindestens zwei durch einen Längsabschnitt (15, 16, 17) voneinander getrennte und in unterschiedliche Richtungen gekrümmte Krümmungsabschnitte (13, 14, 25) aufweist, sodass die Mittenebene (8) über diese beiden Krümmungsabschnitte (13, 14, 25) hinweg einen S-förmigen Verlauf aufweist.

2. Biegefederelement (1) nach Anspruch 1, **dadurch**
**gekennzeichnet, dass** das Material des Abstandserweiterungselements (20, 21) ein zweites Faserkunststoffverbundmaterial (22) mit Fasern (23) ist, deren Länge jeweils weniger als 30 mm, vorzugsweise weniger als 10 mm und besonders vorzugsweise weniger als 1 mm beträgt.

3. Biegefederelement (1) nach Anspruch 2, **dadurch**
**gekennzeichnet, dass** die Fasern (23) in dem zweiten Faserkunststoffverbundmaterial (22) ungerichtet angeordnet sind.

4. Biegefederelement (1) nach Anspruch 2 oder Anspruch 3, **dadurch gekennzeichnet, dass** das zweite Faserkunststoffverbundmaterial (22) ein mit den beiden Deckschichten (2, 3) übereinstimmendes Matrixkunststoffmaterial (6) aufweist.

5. Biegefederelement (1) nach einem der voranstehenden Ansprüche, **dadurch gekennzeichnet, dass** die Mittenebene (8) in dem mindestens einen Krümmungsabschnitt (13, 14, 25) des Biegefederelements (1) eine Richtungsänderung von mehr als 90°, vorzugsweise von mehr als 150° und besonders vorzugsweise von näherungsweise 180° aufweist.

6. Biegefederelement (1) nach einem der voranstehenden Ansprüche, **dadurch gekennzeichnet, dass** das erste Faserkunststoffverbundmaterial (4) der beiden Deckschichten (2, 3) unidirektional in der Längsrichtung (7) des Biegefederelements (1) ausgerichtete Fasern (5) aufweist.

7. Biegefederelement (1) nach Anspruch 6, **dadurch**
**gekennzeichnet, dass** das erste Faserkunststoffverbundmaterial (4) Fasern (5) aufweist, deren Länge sich in Längsrichtung (7) über das ganze Biegefederelement (1) hinweg erstreckt.

## Claims

1. Flexible spring element (1) made of a fibre-plastic composite material (4, 22), wherein the flexible spring element (1) has a cover layer (2, 3) made of a first fibre-plastic composite material (4) on each of two mutually opposed outer sides (9, 10), wherein fibres (5) within the cover layers (2, 3) are aligned parallel relative to one another at least in bundles and run parallel to the outer side (9, 10) associated with the particular cover layer (2, 3), wherein the flexible spring element (1) has at least one curved portion (13, 14, 25), in which a centre plane (8) of the unloaded flexible spring element (1) running with equal spacing between the two cover layers (2, 3) runs in a curved manner in a longitudinal direction (7) of the flexible spring element (1), wherein the flexible spring element (1) has at least one longitudinal portion (15, 16, 17), in which the centre plane (8) of the unloaded flexible spring element (1) either has no significant curvature or has a reversal of curvature, wherein in the case of an intended deflection of the flexible spring element (1) a cover layer portion (18) arranged directed outwardly in the curved portion (13, 14, 25) is subjected to tensile loading and an inwardly directed opposing cover layer portion (19) in the curved portion (13, 14, 25) is subjected to compressive loading, and wherein the flexible spring element (1) comprises exclusively the two cover layers (2, 3) in the at least one longitudinal portion (15, 16, 17), and wherein in the at least one curved portion (13, 14, 25) the flexible spring element (1) has a spacing extending element (20, 21) made of a different material than the two cover layers (2, 3) arranged between the two cover layers (2, 3), **characterised in that** the flexible spring element (1) has at least two curved portions (13, 14, 25) separated from one another by a longitudinal portion (15, 16, 17) and curved in different directions, so that the centre plane (8) has an S-shaped course over these two curved portions (13, 14, 25).

2. Flexible spring element (1) according to claim 1, **characterised in that** the material of the spacing extending element (20, 21) is a second fibre-plastic composite material (22) comprising fibres (23) of which the length is in each case less than 30 mm, preferably less than 10 mm and particularly preferably less than 1 mm.

3. Flexible spring element (1) according to claim 2, **characterised in that** the fibres (23) are arranged undirected in the second fibre-plastic composite material (22).

4. Flexible spring element (1) according to claim 2 or claim 3, **characterised in that** the second fibre-plastic composite material (22) has a matrix plastic material (6) matching the two cover layers (2, 3).

5. Flexible spring element (1) according to any one of the preceding claims, **characterised in that** the centre plane (8) in the at least one curved portion (13, 14, 25) of the flexible spring element (1) has a direction change of more than 90°, preferably of more than 150° and particularly preferably of approximately 180°.

6. Flexible spring element (1) according to any one of the preceding claims, **characterised in that** the first fibre-plastic composite material (4) of the two cover layers (2, 3) comprises fibres (5) aligned unidirectionally in the longitudinal direction (7) of the flexible spring element (1).

7. Flexible spring element (1) according to claim 6, **characterised in that** the first fibre-plastic composite material (4) comprises fibres (5) of which the length in the longitudinal direction (7) extends over the entire flexible spring element (1).

## Revendications

1. Elément élastique de flexion (1) composé d'un matériau composite plastique à base de fibre (4, 22), dans lequel l'élément élastique de flexion (1) présente, sur deux côtés extérieurs (9, 10) se faisant face l'un l'autre, respectivement une couche de recouvrement (2, 3) en un premier matériau composite plastique à base de fibres (4), dans lequel des fibres (5) sont orientés au moins en faisceaux parallèlement les unes par rapport aux autres à l'intérieur des couches de recouvrement (2, 3) et s'étendent parallèlement au côté extérieur (9, 10) associé à la couche de recouvrement (2, 3) respective, dans lequel l'élément élastique de flexion (1) présente au moins une section d'incurvation (13, 14, 15), dans laquelle un plan central (8), s'étendant à une distance égale entre les deux couches de recouvrement (2, 3), de l'élément élastique de flexion (1) non chargé s'étend de manière incurvée dans une direction longitudinale (7) de l'élément élastique de flexion (1), dans lequel l'élément élastique de flexion (1) présente au moins une section longitudinale (15, 16, 17), dans laquelle le plan central (8) de l'élément élastique de flexion (1) non chargé ne présente ni une incurvation notable ni une inversion d'incurvation, dans lequel, lors d'une déviation conforme à l'usage prévu de l'élément élastique de flexion (1), une section de couche de recouvrement (18) disposée de manière dirigée vers l'extérieur dans la section d'incurvation (13, 14, 25) est sollicitée par une traction et une section de couche de recouvrement (19) faisant face dans la section d'incurvation (13, 14, 25) et dirigée vers l'intérieur est sollicitée par une pression, et dans lequel l'élément élastique de flexion (1) présente, dans l'au moins une section longitudinale (15, 16, 17), exclusivement les deux couches de recouvrement (2, 3), et que l'élément élastique de flexion (1) dans l'au moins une section d'incurvation (13, 14, 25) présente un élément d'écartement (20, 21) disposé entre les deux couches de recouvrement (2, 3) composé d'un matériau autre que les deux couches de recouvrement (2, 3), **caractérisé en ce que** l'élément élastique de flexion (1) présente au moins deux sections d'incurvation (13, 14, 25) séparées l'une de l'autre par une section longitudinale (15, 16, 17) et incurvées dans des directions différentes si bien que le plan central (8) présente un tracé en forme de S au-delà desdites deux sections d'incurvation (13, 14, 25).

2. Elément élastique de flexion (1) selon la revendication 1, **caractérisé en ce que** le matériau de l'élément d'écartement (20, 21) est un deuxième matériau composite plastique à base de fibres (22) avec des fibres (23), dont la longueur est respectivement inférieure à 30 mm, de préférence inférieure à 10 mm et en particulier de préférence inférieure à 1 mm.

3. Elément élastique de flexion (1) selon la revendication 2, **caractérisé en ce que** les fibres (23) sont disposées de manière non dirigée dans le deuxième matériau composite plastique à base de fibres (22).

4. Elément élastique de flexion (1) selon la revendication 2 ou la revendication 3, **caractérisé en ce que** le deuxième matériau composite plastique à base de fibres (22) présente un matériau plastique de matrice (6) concordant avec les deux couches de revêtement (2, 3).

5. Elément élastique de flexion (1) selon l'une quelconque des revendications précédentes, **caractérisé en ce que** le plan central (8) dans l'au moins une section d'incurvation (13, 14, 25) de l'élément élastique de flexion (1) présente un changement de direction supérieur à 90°, de préférence supérieur à 150° et en particulier de préférence approximativement de 180°.

6. Elément élastique de flexion (1) selon l'une quelconque des revendications précédentes, **caractérisé en ce que** le premier matériau composite plastique à base de fibres (4) des deux couches de recouvrement (2, 3) présente des fibres (5) orientées de manière unidirectionnelle dans la direction longitudinale (7) de l'élément élastique de flexion (1).

7. Elément élastique de flexion (1) selon la revendication 6, **caractérisé en ce que** le premier matériau composite plastique à base de fibres (4) présente des fibres (5), dont la longueur s'étend dans la direction longitudinale (7) au-delà de la totalité de l'élément élastique de flexion (1).
